# EUROPÄISCHE PATENTSCHRIFT

(11) **EP 2 212 077 B1**
(45) Veröffentlichungstag und Bekanntmachung des Hinweises auf die Patenterteilung: **16.10.2013**
(21) Anmeldenummer: 08785489.9
(22) Anmeldetag: 11.08.2008
(51) Int. Cl.: B29B 9/06, B26D 1/16

(54) **GRANULIERVORRICHTUNG SOWIE MESSER- UND/ODER SCHLEIFKOPF FÜR EINE SOLCHE GRANULIERVORRICHTUNG**
PELLETIZING DEVICE AND BLADE HEAD AND/OR GRINDING HEAD FOR SUCH A PELLETIZING DEVICE
GRANULATEUR ET TÊTE PORTE-LAMES ET/OU PORTE-MEULE POUR UN TEL GRANULATEUR

(30) Priorität: 24.10.2007 DE 202007014853 U
(43) Veröffentlichungstag der Anmeldung: 04.08.2010
(73) Patentinhaber: Gala Kunststoff- Und Kautschukmaschinen GMBH, 46509 Xanten-Birten (DE)
(72) Erfinder: ELOO, Michael, 46509 Xanten (DE); VELTEL, Jürgen, 47626 Kavelaer (DE)
(74) Vertreter: Thoma, Michael
(86) Internationale Anmeldenummer: PCT/EP2008/006609
(87) Internationale Veröffentlichungsnummer: WO 2009/052882

(56) Entgegenhaltungen:
- AT-A1- 502 895
- DE-A1- 3 126 550
- DE-U1-202004 008 230
- GB-A- 1 029 149

## Beschreibung

Die vorliegende Erfindung betrifft einen Granulierer vorzugsweise in Form eines Unterwassergranulierers. Die Erfindung betrifft dabei insbesondere einen Messer- und/oder Schleifkopf für einen solchen Granulierer, mit einem Werkzeugträger, der um eine Werkzeugträger-Drehachse rotatorisch antreibbar ist, sowie zumindest einem an dem Werkzeugträger befestigten, von der Werkzeugträger-Drehachse beabstandeten Schneid- und/oder Schleifwerkzeug zum Abschlagen von aus einer Granuliererlochplatte austretenden Kunststoffschmelze und/oder zum Schleifen der genannten Granuliererlochplatte, wobei das Schneid- bzw. Schleifwerkzeug an dem Werkzeugträger um eine von der Werkzeugträgerdrehachse beabstandete Drehachse drehbar gelagert ist.

Granulierer beispielsweise in Form von Unterwassergranulierern besitzen üblicherweise eine Granuliererlochplatte mit einer Mehrzahl von Bohrungen bzw. Kanälen, durch die hindurch Kunststoffschmelze strangförmig hindurch gepresst wird. Auf der Austrittsseite werden die austretenden Kunststoffschmelzestränge von einem rotierenden Messerkopf abgeschlagen bzw. abgeschnitten, so dass Kunststoffgranulat entsteht, das im Falle eines Unterwassergranulierers von der den Schneidkopf umspülenden Prozessflüssigkeit abtransportiert wird.

Die Qualität der Kunststoffpellets und des Granulierprozesses hängt unter anderem von der Form- bzw. Oberflächengenauigkeit der Lochplatte auf ihrer Austrittsseite bzw. dem präzisen geometrischen Zusammenspiel zwischen der Austrittsseite der Lochplatte und den darüber streichenden Schneid- bzw. Abschlagwerkzeugen ab. Bilden sich beispielsweise durch Verschleiß Unebenheiten auf der Lochplattenaustrittsseite, kann der Kunststoff auf der Lochplattenaustrittsseite zu schmieren anfangen, wodurch ein sauberes Abschneiden bzw. Abschlagen der Pellets beeinträchtigt wird. Es wurde deshalb bereits vorgeschlagen, von Zeit zu Zeit die Lochplatte des Granulierers plan zu schleifen und hierzu anstelle des Messerkopfes einen Schleifkopf mit einem stirnseitigen Schleifbelag zu verwenden, der gegen die Austrittsseite der Lochplatte gedrückt wird, um Letztere plan zu schleifen. Hierbei sind der erreichbaren Oberflächengenauigkeit und -feinheit jedoch bislang Grenzen gesetzt, insbesondere können sich aufgrund der üblichen einachsigen rotatorischen Schleifbewegung ringförmige Riefen in die Lochplattenoberfläche einschleifen.

Neben dem Verschleiß an der Lochplatte kann auch Verschleiß an den Schneidwerkzeugen den Granulierprozess beeinträchtigen. Üblicherweise werden als Schneidwerkzeuge Schneidplatten verwendet, die in Schneidplattenhalterungen im gewünschten Anstellwinkel montiert werden können, so dass sie in der vorgegebenen Winkelstellung über die Lochplatte streichen können, um das austretende Schmelzegut abzuschlagen. Hierbei ist es bekannt, Wendeplatten zu verwenden, d.h. die genannten Schneidplatten können in den Schneidplattenhaltern umgedreht werden, so dass sozusagen beide Seiten der üblicherweise rechteckigen Schneidplatten verwendet werden können, bis sie aufgrund übermäßigen Verschleißes auszumustern sind. Die Standfestigkeit der Schneidplatten ist hierbei jedoch begrenzt, zudem ergeben sich beim Wechsel der Schnittfläche bisweilen Formdifferenzen zu der eingeschliffenen Austrittsseite der Lochplatte.

Aus der GB 1,029,149 ist ein Messerkopf für eine Granuliervorrichtung gemäß dem Oberbegriff des Anspruches 1 bekannt, der auf einem Kreis um die Werkzeugträgerdrehachse angeordnete Schneidmesser aufweist, die drehbar gelagert sind. Die Schneidmesser sind hierbei an Antriebswellen befestigt, die gegenüber der Drehachse des Werkzeugträgers verkippt sind und von Luftmotoren auf der Rückseite des Werkzeugträgers angetrieben werden. Auch die AT 502 895 A1 beschreibt einen Messerkopf für eine Granuliervorrichtung, dessen Werkzeugträger auf einem Kreis um die Werkzeugträgerdrehachse angeordnete Schneidmesser trägt. Die leistenförmigen Schneidmesser sind hierbei durch Haltestücke am Werkzeugträger befestigt, die gegenüber dem Werkzeugträger um sich radial erstreckende Achsen verdreht werden können, so dass verschiedene Anstellwinkel für die Messerplatten eingestellt werden können.

Der vorliegenden Erfindung liegt die Aufgabe zugrunde, eine verbesserte Granuliervorrichtung sowie einen verbesserten Messer- und/oder Schleifkopf für einen Granulierer zu schaffen, die Nachteile des Standes der Technik vermeiden und Letzteren in vorteilhafter Weise weiterbilden. Insbesondere soll ein verbesserter Werkzeugkopf geschaffen werden, der gleichermaßen das Schleifen der Austrittsseite der Lochplatte des Granulierers und das Abschneiden bzw. Abschlagen der aus der Lochplatte austretenden Kunststoffschmelze erlaubt und eine verbesserte Standzeit mit günstigeren Verschleißeigenschaften des Arbeitswerkzeuges besitzt.

Erfindungsgemäß wird diese Aufgabe durch einen Schneid- und/oder Schleifkopf gemäß Anspruch 1 sowie einen Granulierer gemäß Anspruch 15 gelöst. Bevorzugte Ausgestaltungen der Erfindung sind Gegenstand der abhängigen Ansprüche.

Es wird also vorgeschlagen, das zumindest eine Schneid- und/oder Schleifwerkzeug am Werkzeugträger nicht starr in einer vorgegebenen Stellung zu befestigen, sondern ihm gegenüber dem Werkzeugträger einen zusätzlichen Freiheitsgrad bzw. eine zusätzliche Bewegungsachse zu geben, so dass sich das Schneid- bzw. Schleifwerkzeug gegenüber dem Werkzeugträger bewegen kann. Erfindungsgemäß ist das Schneid- und/oder Schleifwerkzeug an dem Werkzeugträger um eine von der Werkzeugträgerdrehachse beabstandete Drehachse drehbar gelagert. Dies ermöglicht dem Schneid- und/oder Schleifwerkzeug eine zweite Bewegungskomponente. Zum einen dreht sich das Schneid- und/oder Schleifwerkzeug zusammen mit dem Werkzeugträger um dessen Werkzeugträgerdrehachse, zum anderen kann sich das Schneid- und/oder Schleifwerkzeug um seine eigene Drehachse relativ zum Werkrzeugträger drehen. Der Werkzeugträger besitzt ein Drehlager für das Schneid- und/oder Schleifwerkzeug, mittels dessen sich das Schneid- und/oder Schleifwerkzeug um sich selbst drehen kann.

Durch die zusätzliche Bewegungskomponente des Schneid- und/oder Schleifwerkzeugs kann zum einen die Abnutzung des genannten Schneid- und/oder Schleifwerkzeugs selbst vergleichmäßigt werden, da sich je nach Drehstellung unterschiedliche Abschnitte abnutzen, was sich über die Zeit betrachtet zu einer gleichmäßigen Abnutzung ergänzt. Zum anderen kann gerade beim Schleifprozess, wenn das Schleif- und/oder Schneidwerkzeug zum Schleifen genutzt wird, die überlagerte Bewegungskomponente eine ringförmige Riefenbildung um die Werkzeugträgerdrehachse herum verhindern. Es wird eine wesentlich feinere und formgenauere Oberfläche auf der Austrittsseite der Lochplatte erzielt. Ferner kann die Drehbewegung des Schleif- und/oder Schneidwerkzeugs um sich selbst auch dazu genutzt werden, die abgeschlagenen Pellets besser abzutransportieren bzw. steht für das Abschneiden bzw. Abschlagen des nächsten Kunststoffschmelzestrangs ein sozusagen frischer Abschnitt des Werkzeugs zur Verfügung.

Die Drehachse des zumindest einen Schneid- und/oder Schleifwerkzeugs erstreckt sich dabei parallel zu der Werkzeugträger-Drehachse.

In Weiterbildung der Erfindung ist dabei die Drehachse des Schneid- und/oder Schleifwerkzeugs richtungsstabil an dem Werkzeugträger ausgerichtet. Alternativ kann die Drehachse des Schneid- und/oder Schleifwerkzeugs auch begrenzt kippbar angeordnet bzw. gelagert sein, um eine Selbstanstellung des Schneid- und/oder Schleifwerkzeuges zu erreichen bzw. geringfügige Fluchtungsfehler auszugleichen. Das Schneid- und/oder Schleifwerkzeug kann also sozusagen selbstanstellend ausgebildet sein, so dass es gegenüber dem Werkzeugträger geringfügig verkippen kann. Bevorzugt ist jedoch im Sinne einer einfachen, stabilen Lagerung die zuvor beschriebene richtungsstabile Lagerung der Drehachse an dem Werkzeugträger.

Erfindungsgemäß ist das Schneid- und/oder Schleifwerkzeug an dem Werkzeugträger rotatorisch antriebsfrei und frei selbstdrehend gelagert. Das Schneid- und/oder Schleifwerkzeug bleibt im Betrieb des Messer- und/oder Schleifkopfes drehbar, wobei die erwünschte Drehbewegung durch das Zusammenwirken des Schneid- und/oder Schleifwerkzeugs mit der Lochplatte entsteht, insbesondere durch die unterschiedlichen Umfangsgeschwindigkeiten, die verschiedene Abschnitte des Schleif- und/oder Schneidwerkzeuges relativ zur Lochplatte besitzen. Streicht das Schneid- und/oder Schleifwerkzeug infolge der Drehung des Werkzeugträgers auf einer Kreisbahn um die Werkzeugträger-Drehachse, besitzt ein radial weiter außen liegender Abschnitt des Schneid- und/oder Schleifwerkzeugs eine größere Umfangsgeschwindigkeit als ein weiter innen liegender Abschnitt. Diese Differenz führt zu einer Drehung des Schneid- und/oder Schleifwerkzeugs während dem Betrieb um seine eigenen Drehachse, wobei die zuvor beschriebene antriebsfreie und selbst drehende Ausbildung des Schneid- und/oder Schleifwerkzeugs eine gewisse Unregelmäßigkeit in der Drehgeschwindigkeit und damit Vorteile bezüglich einer fehlerfrei geschliffenen Lochplattenoberfläche bewirken kann.

In Weiterbildung der Erfindung ist das Schneid- und/oder Schleifwerkzeug mit seiner Drehachse in einem festen Abstand von der Werkzeugträger-Drehachse angeordnet, wobei der genannte Abstand vorteilhafterweise derart gewählt ist, dass das Schneid- und/oder Schleifwerkzeug im Bereich zumindest einer zugehörigen Austrittsbohrung bzw. eines Austrittskanals über die Granuliererlochplatte streicht.

Gemäß einer alternativen Ausführung der Erfindung kann jedoch auch eine Verstellvorrichtung für den Abstand der Drehachse des Schneid- und/oder Schleifwerkzeugs vorgesehen sein, so dass der Abstand der Drehachse des Schneid- und/oder Schleifwerkzeugs von der Werkzeugträgerdrehachse verstellbar ist. Hierdurch kann der Messer- bzw. Schleifkopf für verschiedene Granuliererlochplatten verwendet werden. Wird beispielsweise eine Granuliererlochplatte mit vom Zentrum größerem Lochabstand verwendet, wird lediglich das Schneid- und/oder Schleifwerkzeug am Werkzeugträger weiter nach außen gefahren, d.h. weiter von der Werkzeugträger-Drehachse weg bewegt, so dass es an die entsprechende Geometrie der Granuliererlochplatte angepasst ist.

Die Verstellvorrichtung für den Abstand der Drehachse des Schneid- bzw. Schleifwerkzeugs kann hierbei grundsätzlich verschieden ausgebildet sein. Beispielsweise kann in dem Werkzeugträger eine schlitzförmige Längsführung beispielsweise in Form einer Langlochführung vorgesehen sein, in der das Schneid- und/oder Schleifwerkzeug verfahren werden kann, um den Abstand von der Werkzeugträgerdrehachse zu verstellen. In bevorzugter Weiterbildung der Erfindung kann die Verstellvorrichtung auch einen Schwenkarm aufweisen, der einerseits schwenkbar an dem Korpus des Werkzeugträgers befestigt ist und andererseits das Schneid- und/oder Schleifwerkzeug sowie dessen Drehachse trägt. Wird der Schwenkarm weiter nach außen verschwenkt, nimmt der Abstand des daran gelagerten Schneid- und/oder Schleifwerkzeugs von der Werkzeugträger-Drehachse zu. Umgekehrt kann der genannte Abstand durch Nach-innen-schwenken des genannten Schwenkarms verkleinert werden.

Vorteilhafterweise ist der Verstellvorrichtung dabei eine Feststellvorrichtung zugeordnet, mittels derer zumindest zwei verschiedene Abstände der Werkzeugdrehachse von der Werkzeugträger-Drehachse feststellbar sind. Die Feststellvorrichtung kann dabei beispielsweise eine formflüssige Verriegelungsvorrichtung und/oder eine Klemmvorrichtung beispielsweise in Form eines Klemm-Schraubbolzens aufweisen.

Das zumindest eine drehbar gelagerte Schneid- und/oder Schleifwerkzeug kann grundsätzlich verschiedene Geometrien und Ausbildungen besitzen. Erfindungsgemäß weist das Schneid- und/oder Schleifwerkzeug eine im Wesentlichen plane Stirnseite zur Anlage an die Granuliererlochplatte auf, wobei die plane Stirnseite sich nicht über den gesamten Querschnitt des Arbeitskopfes des Schneid- bzw. Schleifwerkzeugs zu erstrecken braucht. Beispielsweise kann der Arbeitskopf des Schneid- und/oder Schleifwerkzeugs auch eine ringförmige Stirnfläche besitzen und im Zentrum der Stirnseite eine konkave Ausnehmung besitzen, so dass lediglich die genannte Ringfläche an der Lochplatte aufsteht, wobei vorteilhafterweise zumindest die genannte ringförmige Stirnfläche eben ausgebildet ist und sich in einer Ebene senkrecht zur Drehachse des Werkzeugs erstreckt.

Um die Granuliererlochplatte plan schleifen zu können, kann das genannte Schneid- und/oder Schleifwerkzeug stirnseitig mit einem Schleifbelag und/oder einer Schleifmittelstruktur versehen werden. Beispielsweise kann ein Schleifbelag in Form eines Diamantkornteppichs auf der Stirnseite des Schneid- und/oder Schleifwerkzeugs aufgebracht sein. Alternativ oder zusätzlich kann die Stirnfläche des Schneid- und/oder Schleifwerkzeugs auch mit einer in das Material des Arbeitskopfes eingearbeiteten Mikrostruktur beispielsweise nach Art von Fischschuppen mit entsprechenden Schneid- bzw. Schleifkanten versehen sein, die einen spanenden, schleifenden Werkstoffabtrag an der Lochplatte ermöglichen. Alternativ oder zusätzlich kann auch eine Schleifkörner enthaltende Schleifflüssigkeit bzw. -emulsion auf die Lochplatte bzw. zwischen Lochplatte und Schleifkopf gegeben werden, um ggf. auch ohne einen Schleifbelag auf der Arbeitskopfstirnseite eine schleifende Wirkung zu erzielen.

Um wahlweise auch nur als Schneidwerkzeug zum Abschlagen der Kunststoffschmelzestränge arbeiten zu können, kann der genannte Schleifbelag mit der Stirnseite des Werkzeug-Arbeitskopfes lösbar verbindbar sein, beispielsweise nach Art einer Schleifscheibe auf einem Schleifteller aufspannbar sein. Alternativ oder zusätzlich kann das Schneid- und/oder Schleifwerkzeug an dem Werkzeugträger lösbar und auswechselbar angeordnet sein, so dass wahlweise ein Schleifwerkzeug mit Schleifbelag und ein Schneidwerkzeug ohne Schleifbelag am Werkzeugträger montiert werden kann. Unabhängig von der Austauschbarkeit verschiedener Werkzeugtypen ist die Auswechselbarkeit des Schneid- und/oder Schleifwerkzeugs am Werkzeugträger vorteilhaft, um bei auftretendem Verschleiß nicht den gesamten Schneid- bzw. Schleifkopf austauschen zu müssen.

Je nach zu granulierender Kunststoffschmelze können verschiedene Ausbildungen und Geometrien des Schneid- und/oder Schleifwerkzeuges vorteilhaft sein. Insbesondere können verschieden ausgebildete Schneid- bzw. Abschlagkanten Verwendung finden, um die austretenden Kunststoffschmelzestränge in der gewünschten Weise zu granulieren. Eine vorteilhafte Ausbildung der Erfindung kann dabei darin bestehen, dass das Schneid- und/oder Schleifwerkzeug bezüglich seiner Drehachse symmetrisch ausgebildet ist und/oder durch Rotation um die genannte Drehachse in Deckung bringbare Segmente besitzt, so dass sozusagen keine stufenlose Rotationssymmetrie, sondern eine Symmetrie bei Drehung um einen vorbestimmten Winkelbetrag gegeben ist. Das Werkzeug kann eine Teilung besitzen und in Segmente unterteilt sein, die durch Weiterdrehen um den entsprechenden Teilungswinkel miteinander in Deckung bringbar sind.

Insbesondere kann das Schneid- und/oder Schleifwerkzeug in bevorzugter Weiterbildung der Erfindung einen rotationssymmetrischen Arbeitskopf mit kreisrundem Querschnitt besitzen, so dass sich das Schneid- und/oder Schleifwerkzeug vollkommen gleichmäßig drehen und abnutzen kann. Es besitzt dabei sozusagen eine über 360° gleichmäßige Arbeitskante zum Abschlagen bzw. Abschneiden der Kunststoffstränge beim Granulieren.

Alternativ kann der Arbeitskopf jedoch auch einen von der Kreisform abweichenden Querschnitt besitzen, insbesondere in der zuvor genannten Weise in Form einer teilungssymmetrisch, segmentweise identisch geformten Umfangskontur. Bei Vorsehen mehrerer deckungsgleicher Umfangssegmente können grundsätzlich verschiedene Arbeitskopfgeometrien gewählt werden. Beispielsweise kann der Arbeitskopf einen insgesamt blüten- und/oder blumenförmigen Umriss besitzen, der in eine Mehrzahl von bogenförmigen Umfangssegmenten unterteilt ist. Alternativ oder zusätzlich kann der Arbeitskopf des Schneid- und/oder Schleifwerkzeugs auch eine polygonprofilartige Kontur mit vorzugsweise abgerundeten Übergängen zwischen den Polygonabschnitten aufweisen. Beispielsweise kann ein im Wesenlichen mehreckförmiger, beispielsweise sechseck- oder achteckförmiger Arbeitskopf mit abgerundeten Übergängen zwischen den Segmenten vorgesehen sein.

Um ein sauberes Granulieren der aus den Schmelzekanälen der Lochplatte austretenden Kunststoffstränge zu erreichen, besitzt das Schneid- und/oder Schleifwerkzeug in Weiterbildung der Erfindung eine als Schneid- und/oder Abschlagkante ausgebildete Umfangsflanke. Die genannte Schneid- und/oder Abschlagkante ist dabei vorteilhafterweise um die Drehachse umlaufend ausgebildet, insbesondere kann sie bei kreisrundem Querschnitt des Arbeitskopfes eine kreisringförmige Flanke bilden, die eine 360° weit reichende Schneid- bzw. Abschlagkante definiert. Alternativ kann eine segmentweise, bezüglich eines Teilungswinkels vorteilhafterweise deckungsgleiche Ausbildung der genannten Schneid- und/oder Abschlagkante vorgesehen sein, beispielsweise in der zuvor genannten Blütenform oder Polygonzugform mit abgerundeten Übergängen, so dass beispielsweise sechsmal 60° weit reichende Schneid- und/oder Abschlagkantesegmente vorgesehen sind.

Je nach zu schneidender Kunststoffschmelze können verschiedene Schrägungswinkel der Umfangsflanke bzw. der davon gebildeten Schneid- und/oder Abschlagkante vorteilhaft sein. In Weiterbildung der Erfindung schließt die Umfangsflanke zu einer auf die Drehachse senkrecht stehende Stirnebene des Arbeitskopfes einen Flankenwinkel im Bereich von 110° bis 30° ein, wobei in bevorzugter Weiterbildung der Erfindung der genannte Flankenwinkel im Bereich von 90° bis 45°, insbesondere etwa 90° bis 75° betragen kann.

Die Umfangsflanke kann dabei in einem die Drehachse des Werkzeugs enthaltenden Längsschnitt betrachtet verschiedene Verläufe besitzen, beispielsweise bauchig oder auch konkav ausgebildet sein. Ein solcher gekrümmter Flankenverlauf kann je nach Ausbildung ein schärferes Durchtrennen der Schmelzestränge oder ein mehr impulsartiges Abschlagen bewirken. In bevorzugter Weiterbildung der Erfindung jedoch besitzt die Umfangsflanke in einem die Drehachse des Werkzeugs enthaltenden Längsschnitt betrachtet eine gerade Flanke, die in dem zuvor genannten Flankenwinkel zur senkrechten Stirnebene geneigt sein kann.

Die Erfindung wird nachfolgend anhand bevorzugter Ausführungsbeispiele und zugehöriger Zeichnungen näher erläutert. In den Zeichnungen zeigen:
- Fig. 1:: eine schematische, perspektivische Darstellung eines Schneid- und Schleifkopfes eines Unterwassergranulierers auf der Granuliererlochplatte gemäß einer vorteilhaften Ausführung der Erfindung,
- Fig. 2:: eine schematische Darstellung des Schneid- und Schleifkopfes des Unterwassergranulierers aus Fig. 1, wobei der Schneid- und Schleifkopf in den Teilansichten A, B und C in einer Draufsicht, in einer Seitenansicht und einer perspektivischen Ansicht gezeigt ist,
- Fig. 3:: eine schematische Darstellung des Schneid- und Schleifkopfes des Granulierers aus Fig. 1 nach einer weiteren Ausführung der Erfindung, bei der die Schneid- und Abschlagflanke der Schneid- und Schleifwerkzeuge einen Flankenwinkel von 75° besitzt, wobei der Schneid- und Schleifkopf in den Ansichten A, B, C in einer Draufsicht, in einer Seitenansicht und in einer perspektivischen Ansicht dargestellt ist,
- Fig. 4:: eine schematische Darstellung des Schneid- und Schleifkopfes des Granulierers aus Fig. 1 nach einer weiteren Ausführung der Erfindung, bei der die Schneid- und Abschlagflanke der Schneid- und Schleifwerkzeuge einen Flankenwinkel von 90° besitzt, wobei der Schneid- und Schleifkopf in den Ansichten A, B, C in einer Draufsicht, in einer Seitenansicht und in einer perspektivischen Ansicht dargestellt ist,
- Fig. 5:: eine schematische Seitenansicht des drehbar gelagerten Schneid- und Schleifwerkzeugs des Schneid- und Schleifkopfes aus den vorhergehenden Figuren, wobei die Ansichten A, B, C und D verschiedene Werkzeuggeometrien zeigen,

- Fig. 6:: eine stirnseitige Draufsicht auf ein Schneid- und Schleifwerkzeug des Schleif- und Schneidkopfes aus den vorhergehenden Figuren, wobei die verschiedenen Ansichten A bis E verschiedene mögliche Umfangskonturen des Arbeitskopfes des Schneid- und Schleifwerkzeugs zeigen, und
- Fig. 7:: eine perspektivische Ansicht eines Schneid- und Schleifkopfs eines Unterwassergranulierers in einer weiteren vorteilhaften Ausführung der Erfindung, gemäß der der Werkzeugträger eine Verstellvorrichtung in Form von Schwenkarmen zur Verstellung des Abstandes der Drehachsen der Schneid- und Schleifwerkzeuge von der Werkzeugträger-Drehachse aufweist.

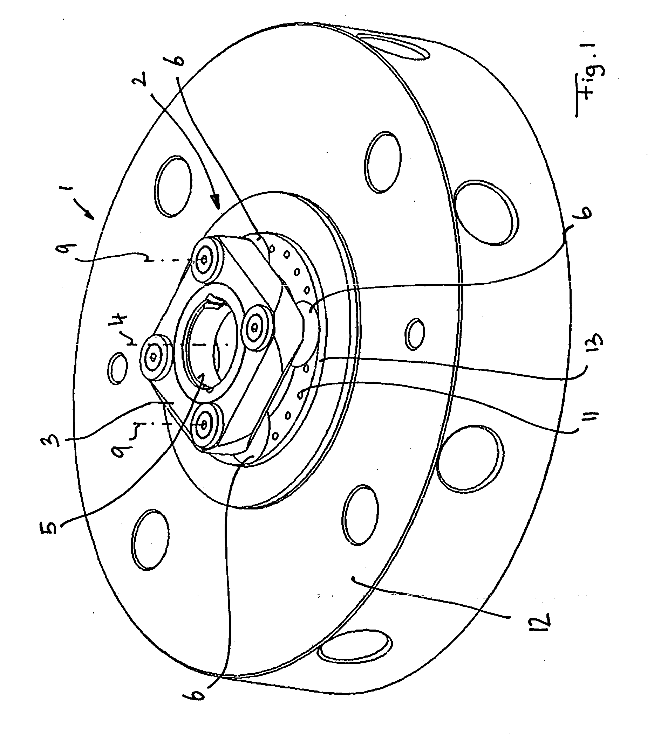

Bei der in Fig. 1 gezeichneten Ausführungsform umfasst die nur teilweise dargestellte Granuliervorrichtung 1 einen Schneid- und Schleifkopf 2, der einen im Wesentlichen plattenartigen, ringförmigen Werkzeugträger 3 umfasst. Der genannte Werkzeugträger 3 ist um eine Werkzeugträger-Drehachse 4 von einer nicht dargestellten Antriebswelle rotatorisch antreibbar. In der gezeichneten Ausführung 1 umfasst der Werkzeugträger 3 dabei eine zentrale, nabenartige Ausnehmung 5, mittels derer der Werkzeugträger 3 an der genannten Antriebswelle bzw. einer daran vorgesehenen Schneid- und Schleifkopflagerung montiert werden kann.

Wie die Figuren 1 bis 4 zeigen, trägt der Werkzeugträger 3 von seiner Werkzeugträger-Drehachse 4 beabstandet mehrere Schneid- und Schleifwerkzeuge 6, die stirnseitig an dem Werkzeugträger 3 angeordnet sind und über den Korpus des genannten Werkzeugträgers 3 axial überstehen. In vorteilhafter Weise sind dabei zwischen zwei und zehn, vorzugsweise zwischen zwei und sechs Schneid- und Schleifwerkzeuge 6 vorgesehen. In der gezeichneten Ausführungsform sind vorteilhafterweise vier solche Schneid- und Schleifwerkzeuge 6 an dem Werkzeugträger 3 befestigt. Die Schneid- und Schleifwerkzeuge 6 können dabei unterschiedlich ausgebidlet sein. Vorteilhafterweise sind jedoch identisch ausgebildete Schneid- und Schleifwerkzeuge an dem Werkzeugträger 3 befestigt.

Gemäß den in den Figuren 1 bis 4 gezeichneten Ausführungsformen umfasst das Schneid- und Schleifwerkzeug 6 einen rotationssymmetrischen, etwa plattenförmigen Arbeitskopf 7, der in den gezeichneten Ausführungsformen gemäß den Figuren 1 bis 4 einen kreisrunden Querschnitt besitzt. Die genannten Schneid- und Schleifwerkzeuge 6 sind dabei an dem Werkzeugträger 3 jeweils drehbar gelagert. Die hierfür vorgesehenen Drehlager 8 besitzen dabei vorteilhafterweise jeweils eine Drehachse 9, die sich im Wesentlichen parallel zu der zentralen Werkzeugträger-Drehachse erstreckt. Die Drehlager 8 sind dabei vorteilhafterweise in den Korpus des Werkzeugträgers 3 versenkt bzw. integriert.

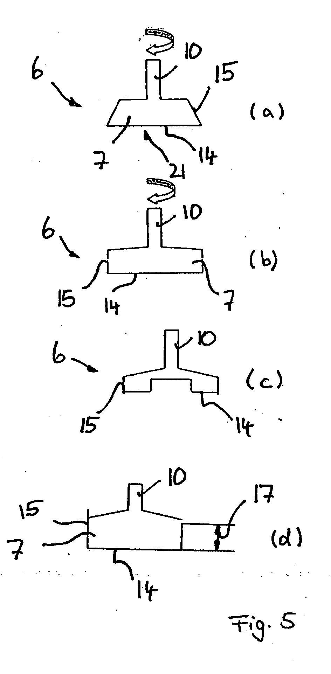

Wie Fig. 5 zeigt, können die Schneid- und Schleifwerkzeuge 6 einen an den Arbeitskopf 7 angeformten Lagerabschnitt 10 aufweisen, der die Form eines Lagerzapfens oder eines anderweitig ausgebildeten, geeigneten Lagerteils haben kann. Insgesamt erhält das Schneid- und/oder Schleifwerkzeug 6 hierdurch eine insgesamt etwa pilzkopfartige Ausbildung.

Die genannten Schneid- und Schleifwerkzeuge 6 sind dabei mittels der Drehwerke 8 an dem Werkzeugträger 3 frei drehbar. Obwohl sie antriebsfrei am Werkzeugträger 3 montiert sind, führen sie im Arbeitsbetrieb dennoch eine Drehbewegung aus. Wie Fig. 1 zeigt, sind die Schneid- und Schleifwerkzeuge 6 von der Werkzeugträgerdrehachse 4 derart beabstandet, dass sie etwa auf den Schmelzedurchtrittskanälen 11 der Granuliererlochplatte 12 bzw. deren Austritte zu liegen kommen. In der gezeichneten Ausführung gemäß Fig. 1 sind dabei die Schmelzedurchtrittskanäle 11 in der Granuliererlochplatte 12 auf einem Lochkreis angeordnet bzw. in einem ringförmigen Abschnitt angeordnet, der gegenüber dem restlichen Korpus der Granuliererlochplatte 12 leicht vorspringt und eine ebene Stirnseitenfläche der Granuliererlochplatte 12 bildet, vgl. Fig. 1.

Die Schneid- und Schleifwerkzeuge 6 sitzen dabei mit ihrer im Wesentlichen ebenen Stirnfläche auf dem genannten Ringabschnitt 13 der Granuliererlochplatte 12 auf. Wenn sie mit dem Werkzeugträger 3 um dessen Werkzeugträger-Drehachse 4 rotieren, erfahren sie in verschiedenen Abschnitten verschiedene Umfangsgeschwindigkeiten, was eine Eigenrotation der genannten Schneid- und Schleifwerkzeuge 6 um ihre Drehachsen 9 bewirkt. Die genannten Schneid- und Schleifwerkzeuge 6 führen damit zwei sich überlagernde Rotationsbewegungen aus, nämlich einerseits die Drehbwegung um die Werkzeugträger-Drehachse 4 und zum anderen die überlagerte Eigenrotation um die Drehachsen 9.

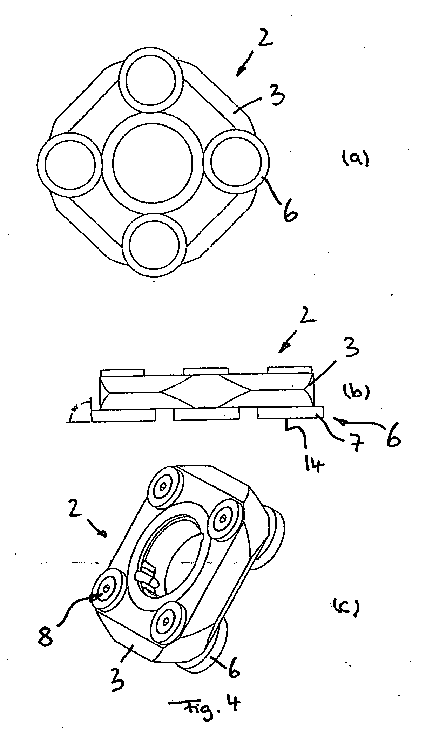

Wie Fig. 5 verdeutlicht, besitzen die Arbeitsköpfe 7 der Schneid- und Schleifwerkzeuge 6 dabei eine ebene Stirnfläche 14, die ggf. ringförmig ausgebildet sein kann, wie dies Fig. 5C zeigt. Die genannte Stirnfläche 14 wird dabei von einer ringförmigen Umfangsflanke 15 umgeben, die eine Schneid- bzw. Abschlagkante zum Abschneiden bzw. Abtrennen der aus den Schmelzedurchtrittskanälen 11 austretenden Kunststoffschmelzestränge bildet. Der Arbeitskopf 7 kann dabei grundsätzlich eine im Wesentlichen zylindrische Kontur besitzen, wie dies neben den Figuren 5B, 5C und 5D auch die Fig. 4 zeigt. In diesem Falle ist die genannte Umfangsflanke 15 zu einer stirnseitigen Ebene des jeweiligen Arbeitskopfes 7, die senkrecht zur Drehachse 9 steht, unter einem Winkel von 90° geneigt, vgl. Fig. 4B.

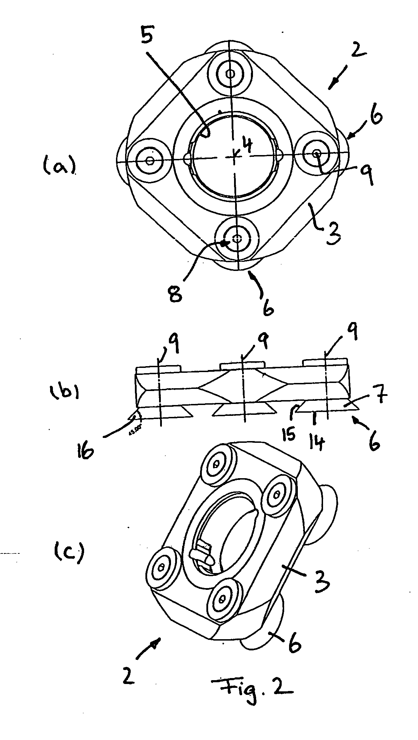

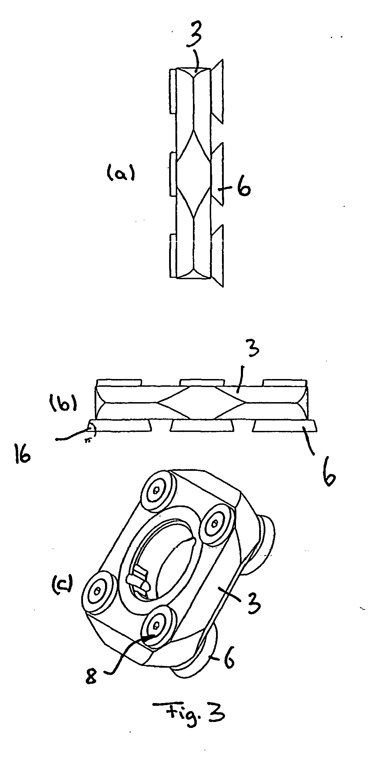

Alternativ kann der Arbeitskopf 7 auch kegelig ausgebildet sein, so dass seine Umfangsflanke 15 unter einem spitzen Winkel zur genannten stirnseitigen Ebene geneigt ist. Fig. 2 zeigt dabei einen kegelig ausgebildeten Arbeitskopf 7 mit einem Flankenwinkel von etwa 45°, während die Ausführung gemäß Fig. 3 einen kegeligen Arbeitskopf mit einem Flankenwinkel von etwa 75° zeigt. Je kleiner der genannte Flankenwinkel 16 ist, desto schärfer werden die Schmelzestränge durchschnitten, während sie bei eher senkrecht stehender Umfangsflanke impulsartig abgeschlagen werden.

Die Höhe des Arbeitskopfes 7 der Schneid- und Schleifwerkzeuge 6, gemessen in Richtung der Drehachse 9, kann dabei an die verschiedenen, zu granulierenden Kunststoffschmelzen angepasst sein und variieren. In bevorzugter Weiterbildung der Erfindung wird die Höhe 17, vgl. Fig. 5D, des Arbeitskopfes 7 dabei kleiner als der Durchmesser des Arbeitskopfes 7 sein, wobei vorzugsweise die Höhe 17 weniger als die Hälfte, insbesondere weniger als ein Drittel des Durchmessers des Arbeitskopfes 7 beträgt. Beispielsweise kann die Höhe 17 im Bereich von etwa einem Zehntel bis einem Drittel des Durchmessers des Arbeitskopfes 7 betragen.

Der Durchmesser des Arbeitskopfes 7 der Schneid- und Schleifwerkzeuge 6 kann dabei ebenfalls an die verschiedenen Granulierbedingungen und insbesondere an die Geometrie der Granuliererlochplatte 12 angepasst sein. Gemäß einer vorteilhaften Ausführung kann der Arbeitskopfdurchmesser etwa 10 % bis 150 %, vorzugsweise etwa 30 % bis 100 %, insbesondere etwa 50 % bis 75 % des Abstandes der Drehachsen 9 von der zentralen Werkzeugträger-Drehachse 4 betragen. Grundsätzlich können dabei die Schneid- und Schleifwerkzeuge 6 mit ihren Drehachsen 9 unterschiedlich weit von der zentralen Werkzeugträger-Drehachse 4 angeordnet sein, insbesondere dann, wenn die Granuliererlochplatte 12 mehr als einen Schmelzedurchtrittskanalkreis aufweist. Vorteilhafterweise können jedoch gemäß der gezeichneten Ausführungsform die Schneid- und Schleifwerkzeuge 6 alle gleich weit von der zentralen Werkzeugträger-Drehachse 4 beabstandet sein.

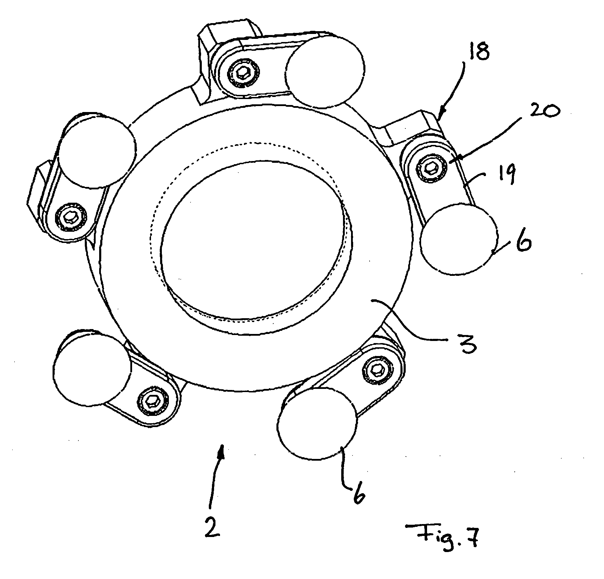

Fig. 7 zeigt eine weitere vorteilhafte Ausführung der Erfindung, gemäß der der Werkzeugträger 3 hinsichtlich des Abstandes der Drehachse 9 der Schneid- und Schleifwerkzeuge 6 von der zentralen Werkzeugträger-Drehachse 4 verstellbar ausgebildet ist. Die entsprechende Verstellvorrichtung 18 umfasst dabei in der gezeichneten Ausführungsform Schwenkarme 19, die mit ihrem einen Ende schwenkbar an dem Korpus des Werkzeugträgers 3 befestigt sind, und zwar um Schwenkachsen, die sich parallel zur zentralen Werkzeugträger-Drehachse 4 erstrecken. Mit ihrem anderen auskragenden Ende tragen die genannten Schwenkarme 19 die Schneid- und Schleifwerkzeuge 6 nebst deren Drehachsen 9 und der zugehörigen Drehlager 8. Werden die Schwenkarme 19 weiter nach außen verschwenkt, nimmt der Abstand der Schneid- und Schleifwerkzeuge 6 von der Werkzeuträger-Drehachse 4 zu, umgekehrt kann durch Nach-innen-schwenken der Schwenkarme 19 dieser Abstand verringert werden. Die Schneid- und Schleifwerkzeuge 6 können dabei vorteilhafterweise einzeln verstellt werden, so dass ggf. auch unterschiedliche Abstände für verschiedene Schneid- und Schleifwerkzeuge 6 eingestellt werden können, beispielsweise dergestalt, dass jedes zweite Schneid- und Schleifwerkzeug 6 weiter außen läuft als jedes dritte Schneid- und Schleifwerkzeug. Die Verstellvorrichtung 18 umfasst dabei Feststellmittel zur Feststellung der jeweils gewünschten Position. In der gezeichneten Ausführung sind dabei als Feststellmittel 20 Klemmbolzen zum Festklemmen der Schwenkarme 19 in der jeweiligen Schwenkstellung vorgesehen.

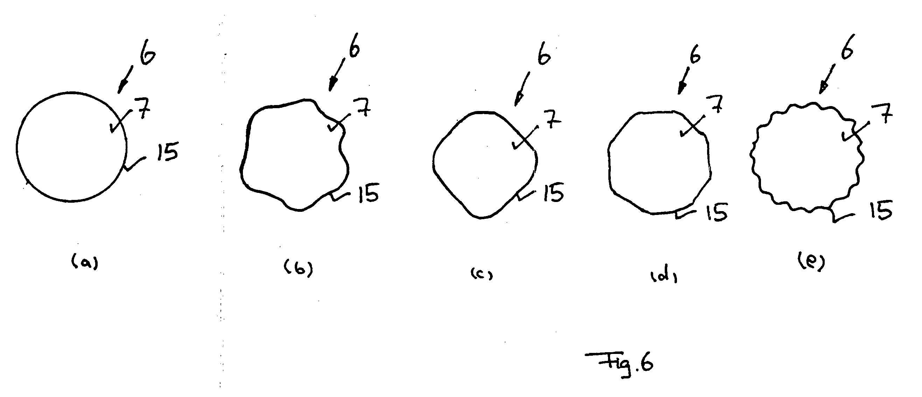

Wie Fig. 6 zeigt, kann der Arbeitskopf 7 verschiedene Querschnitte besitzen, beispielsweise in vorteilhafter Weiterbildung der Erfindung einen kreisrunden Querschnitt, vgl. Fig. 6A. Alternativ können blüten- oder blumenförmige Umfangskonturen vorgegeben sein, vgl. Fig. 6B und 6E. Weiterhin alternativ sind auch polygonartige Umfangsprofile vorzugsweise mit abgerundeten Übergängen möglich, vgl. Fig. 6C und 6E.

## Patentansprüche

1. Messer- und/oder Schleifkopf für einen Granulierer, vorzugsweise Unterwassergranulierer (1), mit einem Werkzeugträger (3), der um eine Werkzeugträger-Drehachse (4) rotatorisch antreibbar ist sowie zumindest einem an dem Werkzeugträger (3) befestigten, von der Werkzeugträger-Drehachse (4) beabstandeten Schneid- und/oder Schleifwerkzeug (6) zum Abschlagen von aus einer Granuliererlochplatte (12) austretenden Kunststoffschmelze und/oder zum Schleifen der genannten Granuliererlochplatte (12), wobei das Schneid- und/oder Schleifwerkzeug (6) an dem Werkzeugträger (3) um eine von der Werkzeugträger-Drehachse (4) beabstandete Drehachse (9) drehbar gelagert ist, **dadurch gekennzeichnet, dass** die Drehachse (9) des Schneid- und/oder Schleifwerkzeugs (6) sich parallel zur Werkzeugträger-Drehachse (4) erstreckt und das Schneid- und/oder Schleifwerkzeug (6) eine plane Stirnseitenfläche (14) zur Anlage an die Granuliererlochplatte (12) aufweist, wobei die genannte Stirnseitenfläche (14) mit einem Schleifbelag (21) und/oder einer Schleifmittelstruktur versehbar ist, und das Schneid- und/oder Schleifwerkzeug (6) an dem Werkzeugträger (3) rotatorisch antriebsfrei und frei selbst drehend gelagert ist.

2. Messer- und/oder Schleifkopf nach Anspruch 1, wobei der Werkzeugträger (3) eine Verstellvorrichtung (18) zur Verstellung des Abstands der Drehachse (9) des Schneid- und/oder Schleifwerkzeugs (6) von der Werkzeugträger-Drehachse (4) aufweist.

3. Messer- und/oder Schleifkopf nach dem vorhergehenden Anspruch, wobei die Verstellvorrichtung (18) einen Schwenkarm (19) aufweist, der einerseits schwenkbar an dem Korpus des Werkzeugträger (3) befestigt ist und andererseits das Schneid- und/oder Schleifwerkzeug (6) nebst dessen Drehachse (9) trägt.

4. Messer- und/oder Schleifkopf nach dem vorhergehenden Anspruch, wobei Feststellmittel (20) zum Fixieren des Schwenkarms (19) in zumindest zwei verschiedenen Schwenkstellungen relativ zum Korpus des Werkzeugträgers (3) vorgesehen sind.

5. Messer- und/oder Schleifkopf nach einem der vorhergehenden Ansprüche, wobei das Schneid- und/oder Schleifwerkzeug (6) bezüglich seiner Drehachse (9) symmetrisch ausgebildet ist und/oder mehrere Segmente aufweist, die durch Drehung um die Drehachse (9) deckungsgleich ineinander überführbar sind.

6. Messer- und/oder Schleifkopf nach einem der vorhergehenden Ansprüche, wobei das Schneid- und/oder Schleifwerkzeug (6) einen rotationssymmetrischen Arbeitskopf (7) mit kreisrundem Querschnitt aufweist.

7. Messer- und/oder Schleifkopf nach einem der vorhergehenden Ansprüche, wobei das Schneid- und/oder Schleifwerkzeug (6) einen Arbeitskopf (7) mit einem von der Kreisform abweichenden Querschnitt aufweist, wobei der Arbeitskopf (7) in mehrere vorzugsweise deckungsgleiche Umfangssegmente unterteilt ist.

8. Messer- und/oder Schleifkopf nach dem vorhergehenden Anspruch, wobei der Arbeitskopf (7) einen blüten- und/oder blumenförmigen Umriss mit einer Mehrzahl von bogenförmigen Umfangssegmenten aufweist.

9. Messer- und/oder Schleifkopf nach Anspruch 7, wobei der Arbeitskopf (7) einen polygonzugförmigen Umriss mit vorzugsweise abgerundeten Übergängen zwischen den Polygonabschnitten aufweist.

10. Messer- und/oder Schleifkopf nach einem der vorhergehenden Ansprüche, wobei das Schneid- und/oder Schleifwerkzeug (6) eine als Schneid- und/oder Abschlagkante ausgebildete Umfangsflanke (15) aufweist, wobei die Schneid- und/oder Abschlagkante um die Drehachse (9) umlaufend ausgebildet ist.

11. Messer- und/oder Schleifkopf nach dem vorhergehenden Anspruch, wobei die Schneid- und/oder Abschlagkante rotationssymmetrisch bezüglich der Drehachse (9) und/oder segmentweise deckungsgleich bezüglich der Drehachse (9) ausgebildet ist.

12. Messer- und/oder Schleifkopf nach einem der vorhergehenden Ansprüche, wobei die Umfangsflanke (15) des Schneid- und/oder Schleifwerkzeugs (6) in einem die Drehachse (9) enthaltenden Längsschnitt betrachtet einen geraden Flankenverlauf besitzt.

13. Messer- und/oder Schleifkopf nach einem der vorhergehenden Ansprüche, wobei die Umfangsflanke (15) zu einer zur Drehachse (9) senkrechten Stirnebene einen Flankenwinkel (16) zwischen 110° und 30°, vorzugsweise zwischen 90° und 45°, insbesondere etwa 90° bis 75°, einschließt.

14. Messer- und/oder Schleifkopf nach einem der vorhergehenden Ansprüche, wobei eine Mehrzahl von Schneid- und/oder Schleifwerkzeugen (6) vorzugsweise in Umfangsrichtung voneinander beabstandet um die Drehachse (4) herum vorgesehen sind.

15. Granulierer, insbesondere Unterwassergranulierer (1), mit einem Messer- und/oder Schleifkopf (2) nach einem der vorhergehenden Ansprüche sowie einer Granuliererlochplatte (12) mit zumindest einem Schmelzedurchtrittskanal (11), der im Bereich der Umlaufbahn des zumindest einen Schneid- und/oder Schleifwerkzeugs (6) des Messer- und/oder Schleifkopfs (2) angeordnet ist.

## Claims

1. A blade head and/or grinding head for a pelletizer, preferably an underwater pelletizer (1), having a tool carrier (3) which can be rotationally driven about a rotary axis (4) of a tool carrier and having at least one cutting tool and/or grinding tool (6) fastened at the tool carrier (3) and spaced apart from the rotary axis (4) of the tool carrier for cutting off plastic melt exiting a perforated pelletizer plate (12) and/or for grinding the named perforated pelletizer plate (12), wherein the cutting tool and/or grinding tool (6) is rotatably supported at the tool carrier (3) about a rotary axis (9) spaced apart from the rotary axis (4) of the tool carrier, **characterised in that** the rotary axis (9) of the cutting tool and/or grinding tool (6) extends in parallel with the rotary axis (4) of the tool carrier and the cutting tool and/or grinding tool (6) has a planar end side surface (14) for contact with the perforated pelletizer plate (12), wherein the named end face surface (14) can be provided with a grinding layer (21) and/or with a grinding material structure and wherein the cutting tool and/or grinding tool (6) is supported rotationally free of drive at the tool carrier (3) and freely rotating itself.

2. A blade head and/or grinding head in accordance with claim 1, wherein the tool carrier (3) has an adjustment device (18) for adjusting the spacing of the rotary axis (9) of the cutting tool and/or grinding tool (6) from the rotary axis (4) of the tool carrier.

3. A blade head and/or grinding head in accordance with the preceding claim, wherein the adjustment device (18) has a pivot arm (19) which is, on the one hand, pivotably fastened to the body of the tool carrier (3) and, on the other hand, caries the cutting tool and/or grinding tool (6) together with its rotary axis (9).

4. A blade head and/or grinding head in accordance with the preceding claim, wherein locking means (20) are provided for fixing the pivot arm (19) in at least two different pivot positions relative to the body of the tool carrier (3).

5. A blade head and/or grinding head in accordance with one of the preceding claims, wherein the cutting tool and/or grinding tool (6) is configured symmetrically with respect to its rotary axis (9) and/or has a plurality of segments which can be moved congruently into one another by rotation about the rotary axis (9).

6. A blade head and/or grinding head in accordance with one of the preceding claims, wherein the cutting tool and/or grinding tool (6) has a rotationally symmetrical working head (7) with a circular cross-section.

7. A blade head and/or grinding head in accordance with one of the preceding claims, wherein the cutting tool and/or grinding tool (6) has a working head (7) having a cross-section deviating from the circular shape, wherein the working head (7) is divided into a plurality of preferably congruent peripheral segments.

8. A blade head and/or grinding head in accordance with the preceding claim, wherein the drive head (7) has a bloom-shaped and/or flower shaped outline having a plurality of arcuate peripheral segments.

9. A blade head and/or grinding head in accordance with claim 7, wherein the working head (7) has a polygonally linear outline having preferably rounded transitions between the polygonal sections.

10. A blade head and/or grinding head in accordance with one of the preceding claims, wherein the cutting tool and/or grinding tool (6) has a peripheral flank (15) configured as a cutting edge and/or cutting-off edge, wherein the cutting edge and/or cutting-off edge is configured peripherally about the rotary axis (9).

11. A blade head and/or grinding head in accordance with one of the preceding claim, wherein the cutting edge and/or cutting-off edge is configured rotationally symmetrical with respect to the rotary axis (9) and/or segmentally congruent with respect to the rotary axis (9).

12. A blade head and/or grinding head in accordance with one of the preceding claims, wherein the peripheral flank (15) of the cutting tool and/or grinding tool (6) has a straight flank extent viewed in a longitudinal section including the rotary axis (9).

13. A blade head and/or grinding head in accordance with one of the preceding claims, wherein the peripheral flank (15) includes a flank angle with respect to an end plane perpendicular to the rotary axis (9) between 110° and 30°, preferably between 90° and 45°, in particular approximately 90° to 75°.

14. A blade head and/or grinding head in accordance with one of the preceding claims, wherein a plurality of cutting tools and/or grinding tools (6) are preferably provided about the rotary axis (4) spaced apart from one another in the peripheral direction.

15. A pelletizer, in particular an underwater pelletizer (1), having a blade head and/or grinding head (2) in accordance with one of the preceding claims as well as having a perforated pelletizer plate (12) with at least one melt passage channel (11) which is arranged in the region of the path of the at least one cutting tool and/or grinding tool (6) of the blade head and/or grinding head (2).

## Revendications

1. Tête porte-lame et/ou porte-meule pour un granulateur, de préférence un granulateur sous l'eau (1), comportant un porte-outil (3), qui peut être entraîné en rotation autour d'un axe de rotation (4) du porte-outil, ainsi qu'au moins un outil coupant et/ou abrasif (6), fixé au porte-outil (3) et à distance de l'axe rotation (4) du porte-outil, pour abattre la masse de matière plastique sortant d'une plaque perforée (12) de granulateur, et/ou pour meuler la plaque perforée (12) du granulateur mentionnée, l'outil coupant et/ou abrasif (6) étant logé contre le porte-outil (3) de façon à pouvoir tourner autour d'un axe de rotation (9) situé à distance de l'axe de rotation (4) du porte-outil, **caractérisée en ce que** l'axe de rotation (9) de l'outil coupant et/ou abrasif (6) s'étend parallèlement à l'axe de rotation (4) du porte-outil, et l'outil coupant et/ou abrasif (6) comprend une face frontale plane (14) pour appui contre la plaque perforée (12) du granulateur, ladite face frontale (14) pouvant être pourvue d'un revêtement abrasif (21) et/ou d'une structure d'éléments abrasifs, et l'outil coupant et/ou abrasif (6) étant logé de façon à pouvoir tourner sans entraînement contre le porte-outil (3), et à tourner librement par lui-même.

2. Tête porte-lame et porte-meule selon la revendication 1, dans laquelle le porte-outil (3) comprend un dispositif de réglage (18) pour régler la distance de l'axe de rotation (9) de l'outil coupant et/ou abrasif (6) à l'axe de rotation (4) du porte-outil.

3. Tête porte-lame et porte-meule selon la revendication précédente, dans laquelle le dispositif de réglage (18) comprend un bras pivotant (19), qui d'une part est fixé en pivotement contre le corps du porte-outil (3) et d'autre part porte l'outil coupant et/ou abrasif (6) au voisinage immédiat de son axe de rotation (9).

4. Tête porte-lame et/ou porte-meule selon la revendication précédente, dans laquelle des moyens de blocage (20) sont prévus pour bloquer le bras pivotant (19) dans au moins deux positions de pivotement différentes par rapport au corps du porte-outil (3).

5. Tête porte-lame et/ou porte-meule selon l'une des revendications précédentes, dans laquelle l'outil coupant et/ou abrasif (6) est configuré d'une manière symétrique par rapport à son axe de rotation (9) et/ou comprend plusieurs segments, qui peuvent passer les uns dans les autres avec coïncidence sous l'effet d'une rotation autour de l'axe de rotation (9).

6. Tête porte-lame et/ou porte-meule selon l'une des revendications précédentes, dans laquelle l'outil coupant et/ou abrasif (6) présente une tête de travail (7), symétrique en rotation, ayant une section transversale circulaire.

7. Tête porte-lame et/ou porte-meule selon l'une des revendications précédentes, dans laquelle l'outil coupant et/ou abrasif (6) présente une tête de travail (7) ayant une section transversale s'écartant de la forme circulaire, la tête de travail (7) étant subdivisée en plusieurs segments périphériques, de préférence coïncidents.

8. Tête porte-lame et/ou porte-meule selon la revendication précédente, dans laquelle la tête de travail (7) présente un contour en forme de corolle et/ou de fleur, avec un grand nombre de segments périphériques en forme d'arc.

9. Tête porte-lame et/ou porte-meule selon la revendication 7, dans laquelle la tête de travail (7) présente un contour polygonal, avec des transitions, de préférence arrondies, entre les segments du polygone.

10. Tête porte-lame et/ou porte-meule selon l'une des revendications précédentes, dans laquelle l'outil coupant et/ou abrasif (6) présente un flanc périphérique (15), configuré comme une arête de coupe et/ou d'abattage, l'arête de coupe et/ou d'abattage étant configurée de façon à tourner autour de l'axe de rotation (9).

11. Tête porte-lame et/ou porte-meule selon la revendication précédente, dans laquelle l'arête de coupe et/ou d'abattage est configurée avec une symétrie de rotation par rapport à l'axe de rotation (9), et avec coïncidence par segments par rapport à l'axe de rotation (9).

12. Tête porte-lame et/ou porte-meule selon l'une des revendications précédentes, dans lequel le flanc périphérique (15) de l'outil coupant et/ou abrasif (6) présente, quand on l'observe dans une coupe longitudinale contenant l'axe de rotation (9), une forme de flanc rectiligne.

13. Tête porte-lame et/ou porte-meule selon l'une des revendications précédentes, dans laquelle le flanc périphérique (15) fait, par rapport à un plan frontal perpendiculaire à l'axe de rotation (9), un angle de flanc (16) compris entre 110 et 30°, de préférence entre 90 et 45°, en particulier d'environ 90 à 75°.

14. Tête porte-lame et/ou porte-meule selon l'une des revendications précédentes, dans laquelle un grand nombre d'outils coupants et/ou abrasifs (6) sont prévus, autour de l'axe de rotation (4), en faisant entre eux de préférence une certaine distance dans la direction périphérique.

15. Granulateur, en particulier granulateur sous l'eau (1), comportant une tête porte-lame et/ou porte-meule (2) selon l'une des revendications précédentes, ainsi qu'une plaque perforée (12) de granulateur comportant au moins un canal (11) de passage de la masse fondue, qui est disposé dans la zone du chemin périphérique du ou des outils coupants et/ou abrasifs (6) de la tête porte-lame et/ou porte-meule (2).
